# EUROPÄISCHE PATENTANMELDUNG

(11) **EP 0 611 517 A1**
(43) Veröffentlichungstag der Anmeldung: **24.08.1994**
(21) Anmeldenummer: 93118421.2
(22) Anmeldetag: 15.11.1993
(51) Int. Cl.: A01B 3/46, A01B 15/14

(54) **Drehpflug**

(30) Priorität: 17.02.1993 DE 9302221 U
(71) Anmelder: Rabewerk GmbH + Co., 49152 Bad Essen (DE)
(72) Erfinder: Reker, Stefan, Dipl.-Ing., D-49163 Bohmte (DE)
(74) Vertreter: Missling, Arne, Dipl.-Ing.

(57) **Zusammenfassung**

Bei einem Drehpflug, der aus einem vorderen und hinteren Pflugrahmen (1,2) besteht und dessen dazwischen vorgesehenes Gelenk (3) bei angehobener Stellung des Drehpfluges etwa senkrecht oder schräg nach hinten geneigt ist, soll das Schlagen des hinteren Pflugrahmens beim Wenden durch eine zweckentsprechende Dämpfung verhindert werden. Dazu ist gemäß der Erfindung ein einziger hydraulischer Schubmotor (12) vorgesehen, der gelenkübergreifend und schwenkbar an einem der beiden Pflugrahmen befestigt ist und in einem Hydraulikkreislauf liegt, in dem außer einer druckabhängigen Drosselstelle (11) ein 2-Wege-Stromventil (26) vorgesehen ist, um eine gleichmäßige Dämpfung zu erzielen.

## Beschreibung

Die Erfindung betrifft einen Drehpflug zum Aufsatteln oder Anhängen an einem Schlepper oder dergleichen mit einem vorderen und einem hinteren, durch ein horizontales Gelenk verbundenen Pflugrahmen, mit einer mindestens ein Rad umfassenden Abstützvorrichtung, welche in der hinteren Hälfte des Drehpfluges angeordnet ist, und einer Tiefen-Führungseinrichtung für den hinteren Pflugrahmen, wobei der hintere Pflugrahmen an dem vorderen Pflugrahmen beschränkt beweglich angelenkt ist.

Bei den bekannten Drehpflügen der genannten Art zeigt sich, daß beim Wenden der Pflugkörper der hintere, gelenkig angeordnete Pflugrahmen unkontrolliert einknickt, schlägt und damit den Pflug sehr stark beansprucht.

Der Erfindung liegt die Aufgabe zugrunde, einen Drehpflug der eingangs genannten Art so auszubilden, daß ein Schlagen des hinteren Pflugrahmens beim Wenden des Drehpfluges sicher gedämpft wird.

Diese Aufgabe wird mit den Merkmalen des Anspruches 1 gelöst. Weitere erfindungsgemäße Merkmale enthalten die Unteransprüche.

Zunächst kann bereits dadurch, daß das lotrechte Gelenk schräg zur Fahrtrichtung angeordnet wird, erreicht werden, daß dieses im ausgehobenen und halb gedrehten Zustand etwa senkrecht steht oder aber etwas nach hinten geneigt ist, so daß der hintere Pflugrahmen im wesentlichen neutral gehalten wird und damit kein labiler Zustand beim Drehvorgang eintritt. Der hintere Pflugrahmen wechselt somit kontinuierlich seine Lage von der Anlage an einem linken zu einem rechten Anschlag, ohne daß ein nennenswertes Schlagen auftritt. Dabei können Dämpfungsmittel vorgesehen sein, die das Gelenk übergreifen, so daß der Schwenkvorgang von dem einen auf den anderen Anschlag entsprechend verzögert wird und ein im wesentlichen sanftes Anlegen der Anschläge gegeneinander während des Drehvorganges erhalten wird. Als Dämpfungselemente können Hydromotoren eingesetzt werden, die einfach wirkend ausgebildet sein können und an beiden Seiten das Gelenk übergreifen; die Zylinder der Hydromotoren sind dann über eine Hydraulikleitung miteinander verbunden, wobei in diese Leitung eine vorzugsweise einstellbare Drosselstelle eingebaut ist.

Wesentlich günstiger ist allerdings die Verwendung eines doppelt wirkenden Schubmotores mit zweiseitiger Kolbenstange, der an einem der gegeneinander verschwenkbaren Pflugrahmen schwenkbar gelagert ist. Dabei kann die Anordnung so getroffen sein, daß an dem jeweils anderen Pflugrahmen ein Lenker angebracht ist, der die Schwenkbewegung auf die Kolbenstange des Schubmotors überträgt. Auf diese Weise ist mit Sicherheit auszuschließen, daß die gegenseitige Verschwenkung der beiden Pflugrahmen zum Klemmen eines Hydromotors führt. Außerdem kann aber nun diese Schwenkbewegung mit relativ einfachen Mitteln stark übersetzt auf den Schubmotor übertragen werden, so daß die Dämpfung wesentlich verbessert ist, die sich noch weiter steigern läßt, wenn der Drosselstelle in der Verbindungsleitung zwischen den beiden Zylindern des Schubmotors ein Stromventil parallelgelegt wird, das in Abhängigkeit von der anliegenden Druckdifferenz betätigbar ist. Auf diese Weise ist die Dämpfung unabhängig von dem anstehenden Druck und fällt wesentlich gleichmäßiger aus.

Durch die vorstehenden Maßnahmen wird beim Wenden der Pflug wesentlich geschont und der Verschleiß erheblich verringert.

Ein Ausführungsbeispiel der Erfindung ist im folgenden anhand der Zeichnung näher beschrieben; in dieser zeigen
Fig. 1 eine Draufsicht auf einen erfindungsgemäß ausgebildeten Drehpflug,
Fig. 2 eine Seitenansicht des hinteren Pflugrahmens mit zwei einfach wirkenden Hydromotoren und
Fig. 3 desgleichen mit einem doppelt wirkenden Schubmotor.

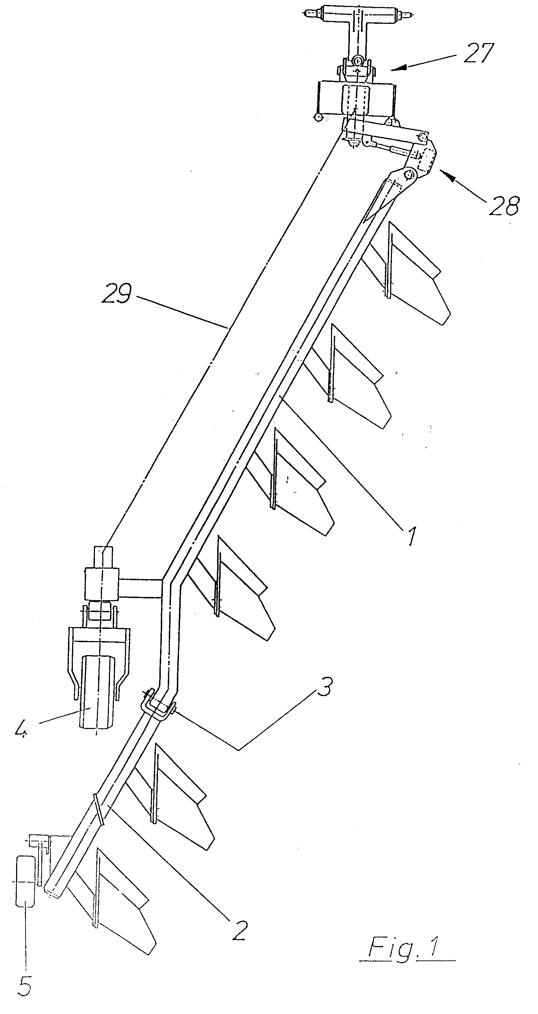

Die Fig. 1 zeigt in Draufsicht in vereinfachter Weise die Ausgestaltung eines weiterzubildenden Drehpfluges. Dieser umfaßt ein Vordergestell 27 sowie eine Schnittbreiteneinstellung 28, an welchen ein vorderer Pflugrahmen 1 sowie ein Stabilisator 29 gelagert sind. Die Abstützung des vorderen Pflugrahmens erfolgt über ein Hinterrad 4. Insofern entspricht der Aufbau dieses Drehpfluges den bekannten Ausgestaltungsformen. Am hinteren Ende des vorderen Pflugrahmens 1 ist an einem horizontalen Gelenk 3 ein hinterer Pflugrahmen 2 gelagert, dessen freies Ende mit einem Tiefen-Führungsrad 5 versehen ist.

Das Gelenk 3 weist in Draufsicht gesehen, d.h. in der Arbeitsstellung, eine Neigung zum Vordergestell 27 und damit zur Fahrtrichtung derart auf, daß bei einem ausgehobenen und halbgedrehten Drehpflug die Achse des Gelenkes 3 etwa senkrecht steht oder aber leicht schräg nach hinten geneigt ist. Hierdurch wird erreicht, daß keine labilen Lagen dadurch entstehen, daß der hintere Pflugrahmen der Drehbewegung nachhinkt, um dann plötzlich von dem einen Anschlag 6 auf den anderen Anschlag 7 umzuschlagen, wodurch erhebliche Erschütterungen und Beschädigungen des Drehpfluges eintreten können.

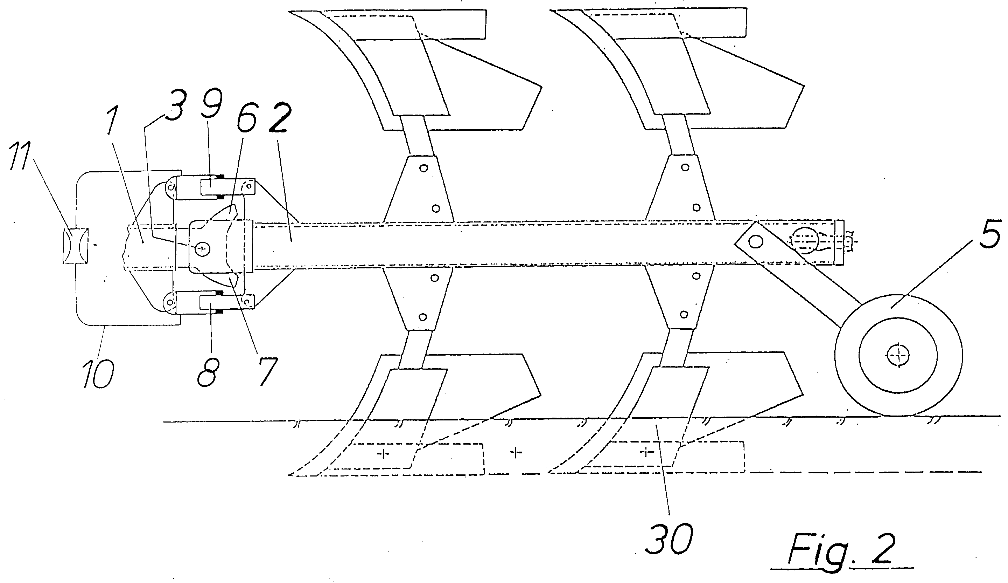

In der Fig. 2 ist der hintere Pflugrahmen 2 mit seinen Pflugkörpern 30 in größerer Darstellung gezeigt. Das horizontale Gelenk 3 gestattet die Verschwenkung des hinteren Pflugrahmens 2 in einem begrenzten Winkel, wobei dieser Winkel durch Anschläge 6,7 begrenzt wird. Zwischen dem vorderen Pflugrahmen 1 und dem hinteren Pflugrahmen 2 sind zu beiden Seiten des Gelenkes 3 einfach wirkende Hydraulikzylinder 8,9 angeordnet, die untereinander über eine Hydraulikleitung 10 verbunden sind. In diese Hydraulikleitung 10 ist eine, vorzugsweise einstellbare Drosselstelle 11 eingeschaltet.

Für das Wenden der Pflugkörper 30 muß der Drehpflug zunächst angehoben werden, was bedeuten kann, daß der hintere Pflugrahmen 2 sich etwas nach unten gegenüber dem vorderen Pflugrahmen 1 absenkt und sich an den Anschlag 7 anlegt. Beim anschließenden Wenden der Pflugkörper werden der Pflugrahmen 1 und der Pflugrahmen 2 um ihre Drehachse um 180° gedreht. Durch die beiden Hydraulikzylinder 8,9 wird erreicht, daß die Verschwenkung von dem Anschlag 6 zum Anschlag 7 in der um 180° gewendeten Stellung der Pflugkörper gedämpft erfolgt, so daß hierdurch zum einen ein Schlagen des Pflugrahmens 2 auf den Anschlag 6 bei dieser Drehrichtung vermieden wird und des weiteren durch die Schrägstellung des Gelenkes 3 erreicht wird, daß der Pflugrahmen 2 beim Wenden der Pflugkörper sich kontinuierlich mit dem Drehen des Pflugrahmens vom Anschlag 6 zum Anschlag 7 bzw. umgekehrt bewegt, so daß die auf den Anschlag einwirkenden Kräfte gering sind.

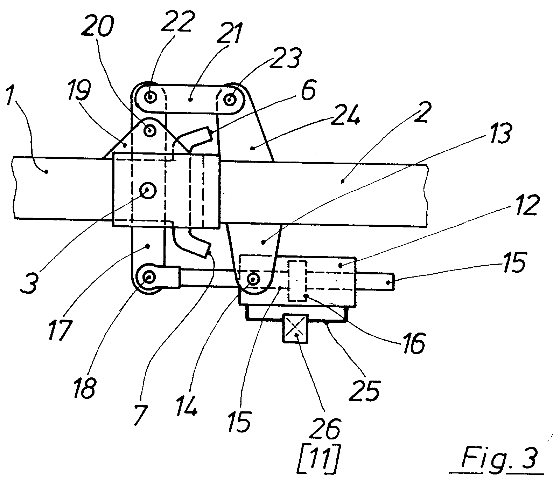

In dem Ausführungsbeispiel der Fig. 3 ist ein einziger, doppelt wirkender Schubmotor 12 zur Gestaltung der Dämpfung vorgesehen. Der Schubmotor 12 ist an einer Konsole 13 um ein Gelenk 14 schwenkbar gelagert, wobei die Konsole 13 fest mit dem hinteren Pflugrahmen 2 verbunden ist. Der Schubmotor 12 ist mit zwei Kolbenstangen 15 ausgerüstet, die einen Kolben 16 antreiben. An der in Fig. 3 linken Kolbenstange 15 befindet sich ein erster Gelenkpunkt 18, an welchem ein Lenker 17 schwenkbar befestigt ist. Am vorderen Pflugrahmen 1 ist ein weiteres Konsol 19 vorgesehen, das einen zweiten Gelenkpunkt 20 aufweist, um den der Lenker 17 schwenkbar ist. Der Lenker 17 ist außerdem über einen weiteren Lenker 21 gelenkig durch entsprechende Gelenkpunkte 22 und 23 mit einem Konsol 24 verbunden, das fest an dem hinteren Pflugrahmen 2 angebracht ist. Die beiden Kammern beiderseits des Kolbens 16 des Schubmotors 12 sind über eine Leitung 25 hydraulisch miteinander verbunden. In der Leitung 25 ist außer einer Drosselstelle 11 entsprechend Fig. 2 noch ein 2-Wege-Stromventil 26 vorgesehen, welches, bei Überschreiten eines vorzugsweise einstellbaren Drucks und nur durch die auftretende Druckdifferenz betätigt, aber ansonsten druckunabhängig, den Durchfluß der Hydraulikflüssigkeit ermöglicht.

## Patentansprüche

1. Drehpflug zum Aufsatteln oder Anhängen an einem Schlepper oder dergleichen mit einem vorderen (1) und einem hinteren (2), durch ein horizontales Gelenk (3) verbundenen Pflugrahmen, mit einer mindestens ein Rad (4) umfassenden Abstützvorrichtung, welche in der hinteren Hälfte des Drehpfluges angeordnet ist, und einer Tiefen-Führungseinrichtung (5) für den hinteren Pflugrahmen (2), wobei der hintere Pflugrahmen (2) an dem vorderen Pflugrahmen (1) beschränkt beweglich angelenkt ist, dadurch gekennzeichnet, daß das Gelenk (3) übergreifende Dämpfungsmittel für die Dämpfung einer Schwenkbewegung des hinteren (2) gegenüber dem vorderen (1) Pflugrahmen vorgesehen sind, die aus einem oder mehreren Hydromotoren (Kolben-Zylinder-Einheiten) bestehen, deren Kolbenstangen (15) bei einer solchen Schwenkbewegung den jeweils zugehörigen Kolben (16) antreiben und dadurch die Hydraulikflüssigkeit aus einer ersten Kammer über eine Drosselstelle (11) in eine zweite Kammer und zurück fördern, wobei die Drosselstelle (11) durch ein steuerbares Stromventil (26) kurzschließbar ist.

2. Drehpflug nach Anspruch 1, dadurch gekennzeichnet, daß das Stromventil (26) in Abhängigkeit von einer an ihm anliegenden Druckdifferenz geschaltet wird.

3. Drehpflug nach Anspruch 2, dadurch gekennzeichnet, daß der Druck wählbar ist, bei dessen Überschreiten das Stromventil (26) geschaltet wird.

4. Drehpflug nach einem der Ansprüche 1 bis 3, dadurch gekennzeichnet, daß das Stromventil (26) als 2-Wege-Stromventil ausgebildet ist.

5. Drehpflug nach einem der Ansprüche 1 bis 4, dadurch gekennzeichnet, daß als Hydromotor ein doppelt wirkender Schubmotor (12) mit einer zweiseitigen Kolbenstange (15) vorgesehen ist.

6. Drehpflug nach Anspruch 5, dadurch gekennzeichnet, daß die Kammern beiderseits des Kolbens (16) des Schubmotors (12) über die Drosselstelle (11) und das zu dieser parallele Stromventil (26) hydraulisch miteinander verbunden sind.

7. Drehpflug nach einem der Ansprüche 5 oder 6, dadurch gekennzeichnet, daß die Schwenkbewegung des hinteren Pflugrahmens (2) übersetzt auf einen ersten Gelenkpunkt (18) an der Kolbenstange (15) übertragen wird.

8. Drehpflug nach einem der Ansprüche 5 bis 7, dadurch gekennzeichnet, daß der Schubmotor (12) schwenkbar an dem vorderen (1) oder hinteren (2) Pflugrahmen um eine zur Achse des Gelenks (3) parallele Achse angeordnet und an dem ersten Gelenkpunkt (18) der Kolbenstange (15) über einen ersten Lenker (17) mit dem jeweils anderen Pflugrahmen (2;1) an einem an diesem ortsfesten zweiten Gelenkpunkt (20) verbunden ist.

9. Drehpflug nach Anspruch 1, dadurch gekennzeichnet, daß der Lenker (17) als zweiarmiger Hebel ausgebildet ist, dessen großer Hebelarm mit dem ersten Gelenkpunkt (18) der Kolbenstange und dessen kleiner Hebelarm über einen zweiten 5Lenker (21) an dem Pflugrahmen (1;2) in einem an diesem ortsfesten dritten Gelenkpunkt (23) angelenkt ist.

10. Drehpflug nach einem der Ansprüche 7 bis 9, dadurch gekennzeichnet, daß die Schwenkachsen der Gelenkpunkte (18;20;23) zur Achse des Gelenks (3) parallel angeordnet sind.

11. Drehpflug nach einem der Ansprüche 1 bis 10, dadurch gekennzeichnet, daß in angehobener Stellung des Drehpfluges das Gelenk (3), gegebenenfalls mit Spiel, arretierbar ist.

12. Drehpflug nach Anspruch 11, dadurch gekennzeichnet, daß das Gelenk (3) mittels eines Steckbolzens oder dergleichen arretierbar ist.

13. Drehpflug nach Anspruch 11, dadurch gekennzeichnet, daß die Arretierung mittels eines Federelementes erfolgt, das eine geringfügige Federung des hinteren (2) gegenüber dem vorderen (1) Pflugrahmen zuläßt.

14. Drehpflug nach einem der Ansprüche 1 bis 13, dadurch gekennzeichnet, daß das zugehörige Gelenk (3), bezogen auf die Arbeitsstellung des Drehpfluges, derart schräg zur Pflugkoppel und damit zur Fahrtrichtung angeordnet ist, daß die Achse des Gelenks (3) in der angehobenen und halb gedrehten Stellung des Drehpfluges etwa senkrecht oder schräg nach hinten geneigt ist.
